# EUROPÄISCHE PATENTSCHRIFT

(11) **EP 2 322 003 B1**
(45) Veröffentlichungstag und Bekanntmachung des Hinweises auf die Patenterteilung: **29.10.2014**
(21) Anmeldenummer: 09780815.8
(22) Anmeldetag: 20.07.2009
(51) Int. Cl.: H04W 64/00, G01S 5/02

(54) **Verfahren, Vorrichtungen und Computerprogrammprodukt zur rechnergestützten Klassifikation von Messungen und merkmalsbasierten Ortung eines mobilen Objekts in einem vorbestimmten Gebiet**
Methods, apparatuses and computer program product for computer-aided classification of measurements and for feature-based positioning of a mobile object in a predetermined region
Procédés, dispositifs et produit logiciel d'ordinateur pour la classification de mesures assistée par ordinateur et pour la localisation basée sur des caractéristiques d'un objet mobile dans une zone prédéterminée

(30) Priorität: 12.09.2008 EP 08016155; 03.04.2009 DE 102009016230
(43) Veröffentlichungstag der Anmeldung: 18.05.2011
(73) Patentinhaber: Siemens Aktiengesellschaft, 80333 München (DE)
(72) Erfinder: BAMBERGER, Joachim, 82152 Krailling (DE); GRIGORAS, Marian, 85579 Neubiberg (DE); KUNZ, Martin, 90459 Nürnberg (DE); SZABO, Andrei, 85521 Ottobrunn (DE)
(86) Internationale Anmeldenummer: PCT/EP2009/059282
(87) Internationale Veröffentlichungsnummer: WO 2010/028895

(56) Entgegenhaltungen:
- WO-A-2007/118518
- HUI WANG, HENNING LENZ, ANDREI SZABO, JOACHIM BAMBERGER, UWE D. HANEBECK: "Enhancing the Map Usage for Indoor Location-Aware Systems" LECTURE NOTES IN COMPUTER SCIENCE, HUMAN-COMPUTER INTERACTION. INTERACTION PLATFORMS AND TECHNIQUES, [Online] Bd. 4551/2007, 23. August 2007 (2007-08-23), Seiten 151-160, XP002554242 Springer Berlin / Heidelberg ISSN: 0302-9743 ISBN: 978-3-540-73106-1 Gefunden im Internet: URL:http://www.springerlink.com/content/98 w202q263kn2316/fulltext.pdf> [gefunden am 2009-11-06]
- HUI WANG ET AL: "WLAN-Based Pedestrian Tracking Using Particle Filters and Low-Cost MEMS Sensors" POSITIONING, NAVIGATION AND COMMUNICATION, 2007. WPNC '07. 4TH WO RKSHOP ON, IEEE, PI, 1. März 2007 (2007-03-01), Seiten 1-7, XP031080608 ISBN: 978-1-4244-0870-2

## Beschreibung

Die Erfindung betrifft ein Verfahren und eine Vorrichtung zur rechnergestützten Klassifikation von Messungen zur merkmalsbasierten Ortung eines mobilen Objekts in einem vorbestimmten Gebiet.

Aus dem Stand der Technik sind verschiedene merkmalsbasierte Ortungsverfahren von mobilen Nutzern bzw. Endgeräten in drahtlosen Kommunikationsnetzen bekannt. Dabei werden als Merkmale z.B. die Feldstärken von Feldern durch das mobile Objekt gemessen, wobei das Feld in dem Kommunikationsnetz von einer Mehrzahl von Basisstationen erzeugt und ausgesendet wird. Als Kommunikationsnetze werden beispielsweise DECT-Netze (DECT = Digital Enhanced Cordless Telecommunication), WLAN-Netze (WLAN = Wireless Local Area Network) sowie die Mobilfunknetze GSM (GSM = Global System for Mobile Communication) und UMTS (UMTS = Universal Mobile Telecommunication System) eingesetzt.

Bei der merkmalsbasierten Ortung werden häufig sog. Referenzkarten eingesetzt, in denen für eine Vielzahl von Stützstellen eine Beziehung zwischen der räumlichen Position der Stützstelle und merkmalsabhängigen Größen der einzelnen Basisstationen hinterlegt ist. Merkmalsabhängige Größen sind beispielsweise in einem feldstärkebasierten Verfahren die Feldstärke des von einer Basisstation ausgesendeten Feldes an der räumlichen Position der Stützstelle oder die an der Basisstation gemessene Feldstärke eines Feldes, das von einem Objekt ausgesendet wird, welches sich an der räumlichen Position der Stützstelle befindet. Durch die Messung der Feldstärke an einer beliebigen Position und durch Vergleich des gemessenen Werts mit den feldstärkeabhängigen Größen an den Stützstellen der Referenzkarte kann die Position des Objekts ermittelt werden.

Aus dem Stand der Technik sind verschiedene Verfahren zur merkmalsbasierten Ortung mit Hilfe von Referenzkarten bekannt. In herkömmlichen Verfahren wird dabei zunächst eine Kalibrierung bzw. Einmessung von Referenzmustern zur Erstellung der Referenzkarte durchgeführt, um eine ausreichende Genauigkeit in strukturierten Umgebungen zu erreichen. Basierend auf der auf diese Weise ermittelten Referenzkarte wird dann die Ortung durchgeführt.

Es sind darüber hinaus Ortungsverfahren bekannt, bei denen auf eine initiale Kalibrierung der Referenzkarte verzichtet wird. In der Druckschrift DE 10 2006 044 293 A1 wird ein solches Ortungsverfahren beschrieben. Bei diesem Verfahren werden parallel zur Ortung auch gleichzeitig die Stützstellen einer Referenzkarte basierend auf den gemessenen Merkmalen des Feldes schrittweise gelernt. Das Verfahren beginnt dabei mit einer groben Initialisierung der Referenzkarte, welche beispielsweise auf einem linearen radialen Modell der Strahlungsausbreitung der Basisstationen basiert. Ein weiteres Verfahren offenbart HUI WANG, et. al.: "Enhancing the Map Usage for Indoor Location-Aware Systems", (2007-08-23), XP002554242, ISSN: 0302-9743, ISBN: 978-3-540-73106-1. Aware Systems", (2007-08-23), XP002554242, ISSN: 0302-9743, ISBN: 978-3-540-73106-1.

Um in den oben beschriebenen Verfahren zur Ortung eines Objekts bzw. zum Lernen einer Referenzkarte eine Fehlerpropagation zu vermeiden, ist sicherzustellen, dass sich das Objekt bei der Ortung bzw. beim Lernen der Referenzkarte nur in einem vorbestimmten, zur Ortung vorgesehenen Gebiet bewegt. Hierdurch wird vermieden, dass Messungen, welche außerhalb des vorbestimmten Gebiets liegen, diesem Gebiet zugeordnet werden und somit zu einer Verfälschung der Ortung bzw. der gelernten Referenzkarte führen. Es besteht jedoch das Bedürfnis, auch eine Ortung bzw. ein Lernen einer Referenzkarte für ein sich beliebig im Umfeld des vorbestimmten Gebiets bewegendes Objekt zu ermöglichen, so dass nicht sichergestellt werden muss, dass sich das Objekt auch immer in dem vorbestimmten Gebiet befindet. In einem solchen Fall muss ein geeignetes Verfahren geschaffen werden, mit dem festgestellt werden kann, ob sich das Objekt innerhalb oder außerhalb des Gebiets der Referenzkarte befindet.

Aufgabe der Erfindung ist es deshalb, ein Verfahren bzw. eine Vorrichtung zur rechnergestützten Klassifikation von Messungen zur merkmalsbasierten Ortung eines mobilen Objekts zu schaffen, mit dem automatisch festgestellt werden kann, ob sich das mobile Objekt bei einer jeweiligen Messung in einem vorbestimmten Gebiet befindet.

Diese Aufgabe wird durch das Verfahren gemäß Patentanspruch 1 bzw. die Vorrichtung gemäß Patentanspruch 24 gelöst. Weiterbildungen der Erfindung sind in den abhängigen Ansprüchen definiert.

Das erfindungsgemäße Verfahren dient zur rechnergestützten Klassifikation von Messungen in einem vorbestimmten Gebiet, für das eine oder mehrere Ausgangsbereich vorgegeben sind, über welche das mobile Objekt das vorbestimmte Gebiet verlassen und betreten kann, wobei jede Messung durch einen Messzeitpunkt und gemessene Merkmale von mehreren Basisstationen spezifiziert ist, wobei ein Merkmal einer Basisstation ein von der Basisstation ausgesendetes Feld am Objekt oder ein vom Objekt ausgesendetes Feld an der Basisstation charakterisiert. Die Merkmale sind z.B. entsprechende Signalstärken der ausgesendeten Felder. Die Merkmale können jedoch gegebenenfalls auch die Laufzeit der Signale bzw. die Winkelverteilungen der Signale betreffen.

Erfindungsgemäß wird basierend auf den Positionen der Basisstationen in Bezug auf das vorbestimmte Gebiet und den bei den jeweiligen Messungen gemessenen Merkmalen der Basisstationen die Messungen klassifiziert, wobei eine Klassifikation zumindest in eine erste und eine zweite Klasse folgt. Dabei wird eine jeweilige Messung der ersten Klasse als eine Messung in einer Position des mobilen Objekts innerhalb des vorbestimmten Gebiets eingestuft und eine jeweilige Messung einer zweiten Klasse wird als eine potentielle Messung in einer Position des mobilen Objekts außerhalb des vorbestimmten Gebiets eingestuft. Die Messungen der ersten Klasse sind somit Messungen, für die aufgrund der gemessenen Merkmale zuverlässig davon ausgegangen werden kann, dass diese Messungen Positionen des mobilen Objekts innerhalb des vorbestimmten Gebiets betreffen. Dies ist bei Messungen der zweiten Klasse nicht der Fall, so dass diese Messungen als potentielle Messungen außerhalb des vorbestimmten Gebiets eingestuft werden. Bei der beschriebenen Klassifikation wird vorzugsweise keine Ortung im eigentlichen Sinne durchgeführt, sondern es werden basierend auf den bekannten Positionen der Basisstationen und den gemessenen Merkmalen entsprechende Kriterien festgelegt, gemäß denen festgestellt werden kann, ob ein mobiles Objekt einer Position innerhalb des vorbestimmten Gebiets zugeordnet werden kann.

Um eine Messung einer zweiten Klasse gegebenenfalls doch noch dahingehend zu spezifizieren, dass sie innerhalb des vorbestimmten Gebiets liegt, wird erfindungsgemäß der Bewegungsweg des mobilen Objekts im Umfeld einer solchen Messung nachverfolgt. Insbesondere wird für eine jeweilige Messung der zweiten Klasse eine Anzahl von aufeinander folgenden Messungen vor und/oder nach dem Messzeitpunkt der jeweiligen Messung bis zum Auftreten einer Messung der ersten Klasse dahingehend analysiert, ob das mobile Objekt im Laufe der Anzahl von Messungen das vorbestimmte Gebiet über einen Ausgangsbereich verlassen oder betreten hat, wobei im Falle, dass das mobile Objekt das vorbestimmte Gebiet nicht verlassen oder betreten hat, die jeweilige Messung der ersten Klasse zugeordnet wird.

Das erfindungsgemäße Verfahren zeichnet sich dadurch aus, dass in dem Verfahren eine Information über Ausgangsbereiche des vorbestimmten Gebiets berücksichtigt wird, wobei basierend auf dieser Information ein Großteil der Messungen dahingehend klassifiziert werden kann, ob sie innerhalb des vorbestimmten Gebiets liegen. Das erfindungsgemäße Verfahren kann insbesondere als Vorverarbeitungsschritt zur Durchführung der eigentlichen Ortung bzw. des Lernens von Referenzkarten eingesetzt werden, wobei zur eigentlichen Ortung bzw. zum Lernen der Referenzkarten die eingangs erwähnten merkmalsbasierten Ortungsverfahren verwendet werden können. Insbesondere ist das vorbestimmte Gebiet dabei das Gebiet, welches von der zu lernenden Referenzkarte abgedeckt wird. Bei der Ortung bzw. beim Lernen der Referenzkarte werden dabei nur diejenigen Messungen berücksichtigt, welche der ersten Klasse zugeordnet sind und somit zweifelsfrei innerhalb des vorbestimmten Gebiets liegen.

In einer bevorzugten Ausführungsform des erfindungsgemäßen Verfahrens werden bei der Klassifikation ferner Messungen einer dritten Klasse berücksichtigt, wobei eine Messung der dritten Klasse als eine Messung in einer Position des mobilen Objekts außerhalb des vorbestimmten Gebiets eingestuft wird. Die Messungen der dritten Klasse ermöglichen dabei über die gemessenen Merkmale der Basisstationen eine zuverlässige Feststellung, dass die Position des mobilen Objekts bei der Messung außerhalb des vorbestimmten Gebiets liegt. Auch die Messungen dieser Klasse werden dann bei einer entsprechenden merkmalsbasierten Ortung nicht mehr berücksichtigt.

In einer weiteren Ausgestaltung des erfindungsgemäßen Verfahrens wird im Falle, dass die Analyse der Anzahl von aufeinander folgenden Messungen vor und/oder nach dem Messzeitpunkt der jeweiligen Messung bis zum Auftreten einer Messung der ersten Klasse ergibt, dass das mobile Objekt das vorbestimmte Gebiet verlassen oder betreten hat, zumindest die jeweilige Messung der dritten Klasse zugeordnet. Vorzugsweise werden dabei alle Messungen der Anzahl von aufeinander folgenden Messungen mit Messzeitpunkten vor Betreten oder nach Verlassen des vorbestimmten Gebiets der dritten Klasse und die restlichen Messungen der Anzahl von aufeinander folgenden Messungen der ersten Klasse zugeordnet. Auf diese Weise können eine Vielzahl von Messungen unter Berücksichtigung entsprechend definierter Ausgangsbereiche klassifiziert werden.

In einer weiteren Ausführungsform des erfindungsgemäßen Verfahrens wird eine jeweilige Messung dann der ersten Klasse zugeordnet, wenn das Merkmal zumindest einer Basisstation eines ersten Typs ein vorbestimmtes Kriterium erfüllt, wobei Basisstationen des ersten Typs innerhalb des vorbestimmten Gebiets liegen und das vorbestimmte Kriterium derart ausgestaltet ist, dass bei Erfüllung des Kriteriums darauf geschlossen werden kann, dass das mobile Objekt innerhalb des vorbestimmten Gebiets liegt. Durch geeignete Definition von entsprechenden Basisstationen, welche insbesondere große Abstände zu Randbereichen des vorbestimmten Gebiets aufweisen, kann ohne Durchführung einer Ortung ein geeignetes Kriterium geschaffen werden, wonach beurteilt werden kann, dass ein mobiles Objekt innerhalb des vorbestimmten Gebiets liegt. Wie weiter unten noch näher erläutert, kann das Kriterium beispielsweise das Überschreiten einer vorbestimmten Schwelle der Signalstärke des Feldes der Basisstation des ersten Typs sein.

In einer weiteren Ausgestaltung des erfindungsgemäßen Verfahrens wird eine jeweilige Messung dann der zweiten Klasse zugeordnet, wenn die jeweilige Messung keiner anderen Klasse zugeordnet werden kann und/oder wenn ein oder mehrere vorgegebene Bedingungen erfüllt sind.

In einer weiteren Ausgestaltung des erfindungsgemäßen Verfahrens wird eine jeweilige Messung dann der dritten Klasse zugeordnet, wenn das Merkmal zumindest einer Basisstation eines zweiten Typs ein vorbestimmtes Kriterium erfüllt, wobei die Basisstationen des zweiten Typs außerhalb des vorbestimmten Gebiets liegen und das vorbestimmte Kriterium derart ausgestaltet ist, dass bei der Erfüllung des Kriteriums darauf geschlossen werden kann, dass das mobile Objekt außerhalb des vorbestimmten Gebiets liegt. Durch geeignete Definition von Basisstationen des zweiten Typs, welche insbesondere Basisstationen sind, welche weit entfernt vom vorbestimmten Gebiet liegen, kann somit ein geeignetes Kriterium zur Klassifikation eines mobilen Objekts an einer Position außerhalb des vorbestimmten Gebiets geschaffen werden. Wie unten noch näher beschrieben, kann dabei insbesondere eine Messung einer dritten Klasse zugeordnet werden, wenn die Signalstärke des Feldes der Basisstation des zweiten Typs einen vorbestimmten Wert überschreitet.

In einer weiteren Ausgestaltung des erfindungsgemäßen Verfahrens wird der Fall, dass für die Analyse der Anzahl von aufeinander folgenden Messungen vor und/oder nach dem Messzeitpunkt der jeweiligen Messung keine Messung der ersten Klasse gefunden wird, derart berücksichtigt, dass der jeweilige Messpunkt in der zweiten Klasse bleibt. Somit wird ein Messpunkt, der nicht sicher der ersten Klasse zugeordnet werden kann, auch nicht in diese Klasse aufgenommen. Hierdurch wird die Anzahl von Fehlklassifikationen, welche die Ortung bzw. das Lernen einer Referenzkarte verfälschen, möglichst gering gehalten.

In einer weiteren Ausführungsform des erfindungsgemäßen Verfahrens werden für eine jeweilige Messung der ersten Klasse alle Messungen innerhalb einer Zeitspanne vor und/oder nach dem der jeweiligen Messung zugeordneten Messzeitpunkt der ersten Klasse zugeordnet, wobei die Zeitspanne durch das Zeitintervall gegeben ist, in dem sich das mobile Objekt ausgehend von seiner Position zum Messzeitpunkt der jeweiligen Messung basierend auf einer vorbestimmten Maximalgeschwindigkeit des mobilen Objekts nicht aus dem vorbestimmten Gebiet heraus bewegen kann. Auf diese Weise können unter Berücksichtigung eines geeigneten Bewegungsmodells des mobilen Objekts in einfacher Weise weitere Messungen der ersten Klasse zugeordnet werden. Werden zur Klassifikation der Messungen Basisstationen vom ersten Typ verwendet, wird für die jeweilige Messung der ersten Klasse die Position des mobilen Objekts zum Messzeitpunkt der jeweiligen Messung als die Position der Basisstation des ersten Typs abgeschätzt, deren Merkmal das vorbestimmte Kriterium erfüllt.

Das soeben beschriebene Bewegungsmodell kann in geeigneter Weise auch für Messungen der dritten Klasse eingesetzt werden. Dabei werden für eine jeweilige Messung der dritten Klasse alle Messungen innerhalb einer Zeitspanne vor und/oder nach dem der jeweiligen Messung zugeordneten Messzeitpunkt der dritten Klasse zugeordnet, wobei die Zeitspanne durch das Zeitintervall gegeben ist, in dem sich das mobile Objekt ausgehend von seiner Position zum Messzeitpunkt der jeweiligen Messung basierend auf einer vorbestimmten Maximalgeschwindigkeit des mobilen Objekts nicht in das vorbestimmte Gebiet hinein bewegen kann.

In der weiteren Ausgestaltung der Erfindung, bei der für die Klassifikation von Messungen der dritten Klasse eine Basisstation vom zweiten Typ zum Einsatz kommt, wird für die jeweilige Messung der dritten Klasse die Position des mobilen Objekts zum Messzeitpunkt der jeweiligen Messung als die Position der Basisstation des zweiten Typs abgeschätzt, deren Merkmal das vorbestimmte Kriterium erfüllt.

In einer weiteren weiteren Ausgestaltung des erfindungsgemäßen Verfahrens werden bei der Analyse der Anzahl von aufeinander folgenden Messungen vor und/oder nach dem Messzeitpunkt der jeweiligen Messung die Positionen des mobilen Objekts basierend auf den gemessenen Merkmalen der Basisstationen zu den Messzeitpunkten der Anzahl von Messungen mit einem Ortungsverfahren und/oder einem Bewegungsmodell des mobilen Objekts geschätzt. Basierend auf den geschätzten Positionen kann dann ermittelt werden, ob das mobile Objekt das vorbestimmte Gebiet über einen Ausgangsbereich betreten oder verlassen hat. Es wird dabei insbesondere ein grobes Ortungsverfahren verwendet, welches beispielsweise auf einer groben Initialisierung einer entsprechenden Referenzkarte basiert. Diese Initialisierung kann mit einem entsprechenden Wellenausbreitungsmodell der einzelnen Basisstationen erfolgen. Ebenso kann die grobe Ortung auch ohne Referenzkarte, beispielsweise durch Triangulation der Merkmale der einzelnen Basisstationen, durchgeführt werden. Ferner kann ein Bewegungsmodell bei der Ortung ein-fließen, welches bereits oben beschrieben wurde und die maximale Geschwindigkeit des mobilen Objekts berücksichtigt. Bei der Verwendung eines Bewegungsmodells wird mittels der Positionsschätzung insbesondre ermittelt, welche Messungen ausgehend von einer geschätzten Position des mobilen Objekts am Messzeitpunkt sicher innerhalb des vorbestimmten Gebiets liegen.

In einer besonders bevorzugten Ausführungsform wird als das Ortungsverfahren bei der Analyse der Anzahl von aufeinander folgenden Messungen ein musterbasiertes Verfahren eingesetzt, welches auf einer entsprechenden Referenzkarte beruht, wobei die Verwendung von Referenzkarten bereits im Vorangegangenen ausführlich beschrieben wurde. Dabei wird die Positionsbestimmung des mobilen Objekts basierend auf der Übereinstimmung der gemessenen Merkmale der Basisstationen mit den Merkmalen von Stützstellen in der Referenzkarte ermittelt. Vorzugsweise sind vorbestimmte Stützstellen in der Referenzkarte dem oder den Ausgangsbereichen des vorbestimmten Gebiets zugeordnet, und mit Hilfe der vorbestimmten Stützstellen wird bestimmt, ob das mobile Objekt das vorbestimmte Gebiet über einen Ausgangsbereich betreten oder verlassen hat. Anstelle bzw. zusätzlich zu einem musterbasierten Ortungsverfahren kann auch ein auf Triangulation basierendes Ortungsverfahren verwendet werden.

Die mit den Messungen ermittelten Merkmale der Basisstationen können unterschiedlich ausgestaltet sein. Vorzugsweise werden als Merkmale die Signalstärken und/oder die Laufzeiten und/oder die Winkelverteilungen des von den Basisstationen ausgesendeten Felds am Objekt oder des vom Objekt ausgesendeten Felds an den Basisstationen verwendet. Insbesondere wird dabei eine jeweilige Messung der ersten Klasse zugeordnet, wenn die Signalstärke zumindest einer Basisstation eines ersten Typs einen vorbestimmten Wert überschreitet. Ebenso wird vorzugsweise eine jeweilige Messung der dritten Klasse zugeordnet, wenn die Signalstärke zumindest einer Basisstation des zweiten Typs einen vorbestimmten Wert überschreitet.

In einer weiteren Ausgestaltung des erfindungsgemäßen Verfahrens, bei der als Merkmale Signalstärken berücksichtigt werden, wird eine jeweilige Messung dann der zweiten Klasse zugeordnet, wenn zumindest eine der folgenden Bedingungen erfüllt ist:
- die Signalstärken aller Basisstationen innerhalb des vorbestimmten Gebiets liegen unterhalb eines vorbestimmten Werts;
- die Signalstärken vorbestimmter Basisstationen außerhalb des vorbestimmten Gebiets liegen oberhalb eines vorbestimmten Werts.

In einer weiteren Ausgestaltung des erfindungsgemäßen Verfahrens wird eine jeweilige Messung dann der zweiten Klasse zugeordnet, wenn zumindest die Bedingung erfüllt ist, dass keine ausreichende Übereinstimmung der Merkmale der Basisstationen der jeweiligen Messung mit den Merkmalen zumindest einer Stützstelle in der Referenzkarte vorliegt. Hierdurch werden solche Messungen, welche aufgrund ihrer schlechten Übereinstimmung mit der Referenzkarte mit einer gewissen Wahrscheinlichkeit außerhalb des vorbestimmten Gebiets liegen, geeignet identifiziert.

In einer besonders bevorzugten Ausführungsform des erfindungsgemäßen Verfahrens werden gleichzeitig Messungen von mehreren vorbestimmten Gebieten klassifiziert. Vorzugsweise liegen die vorbestimmten Gebiete dabei in unterschiedlichen Stockwerken eines Gebäudes, und es sind Ausgangsbereiche der vorbestimmten Gebiete spezifiziert, über welche ein mobiles Objekt die Stockwerke wechseln kann. Auf diese Weise wird mit Hilfe einer zweidimensionalen Ortung in mehreren Stockwerken eine Separation der einzelnen Stockwerke ermöglicht, so dass simultan Referenzkarten von unterschiedlichen Stockwerken bestimmt werden können. Durch die Separation der Stockwerke basierend auf den Messungen kann ferner eine quasi dreidimensionale Ortung des mobilen Objekts innerhalb des Gebäudes durchgeführt werden kann.

Das erfindungsgemäße Verfahren kann beispielsweise offline nach der eigentlichen Bewegung des Objekts und der dabei durchgeführten Messungen ausgeführt werden. Es besteht jedoch auch die Möglichkeit, dass das Verfahren während der Durchführung der Messungen ausgeführt wird, wobei in diesem Fall die Messungen in einem vorbestimmten Zeitintervall geeignet gepuffert werden, um hierdurch eine entsprechende Nachverfolgung von Messungen zu ermöglichen.

Neben dem oben beschriebenen Verfahren zur Klassifikation von Merkmalen betrifft die Erfindung ferner ein Verfahren zur merkmalsbasierten Ortung eines mobilen Objekts in einem vorbestimmten Gebiet gemäß Patentanspruch 23, für das eine oder mehrere Ausgangsbereiche vorgegeben sind, über welche das mobile Objekts das vorbestimmte Gebiet verlassen und betreten kann, wobei jede Messung durch einen Messzeitpunkt und gemessene Merkmale von mehreren Basisstationen spezifiziert ist, wobei ein Merkmal einer Basisstation ein von der Basisstation ausgesendetes Feld am Objekt oder ein vom Objekt ausgesendetes Feld an der Basisstation charakterisiert, wobei die Messungen basierend auf dem oben beschriebenen erfindungsgemäßen Verfahren klassifiziert werden und bei der Ortung ausschließlich Messungen der ersten Klasse berücksichtigt werden. Auf diese Weise werden eine korrekte Ortung und gegebenenfalls ein korrektes Lernen einer Referenzkarte in geeigneter Weise ermöglicht.

Neben den oben beschriebenen Verfahren betrifft die Erfindung ferner eine Vorrichtung zur rechnergestützten Klassifikation von Messungen zur merkmalsbasierten Ortung eines mobilen Objekts in einem vorbestimmten Gebiet gemäß Patentanspruch 24, wobei die Vorrichtung derart ausgestaltet ist, dass jede Ausgestaltung des oben beschriebenen erfindungsgemäßen Klassifikationsverfahrens mit der Vorrichtung durchführbar ist.

Darüber hinaus betrifft die Erfindung eine Vorrichtung zur merkmalsbasierten Ortung eines mobilen Objekts in einem vorbestimmten Gebiet gemäß Patentanspruch 25, wobei die Vorrichtung derart ausgestaltet ist, dass das oben beschriebene Ortungsverfahren mit der Vorrichtung durchführbar ist.

Ferner umfasst die Erfindung ein Computerprogrammprodukt mit einem auf einem maschinenlesbaren Träger gespeicherten Programmcode gemäß Patentanspruch 26 zur Durchführung der oben beschriebenen Verfahren, wenn das Programm auf einem Rechner abläuft.

Ausführungsbeispiele der Erfindung werden nachfolgend anhand der beigefügten Figuren detailliert beschrieben.

Es zeigen:
- Fig. 1: eine schematische Draufsicht auf den Grundriss des Erdgeschosses eines Gebäudes mit einer Mehrzahl von darin installierten Basisstationen, wobei eine Ausführungsform des erfindungsgemäßen Verfahrens basierend auf Messungen dieser Basisstationen durchgeführt und getestet wurde;
- Fig. 2: ein Ablaufdiagramm, welches die Schritte einer Ausführungsform des erfindungsgemäßen Verfahrens verdeutlicht;
- Fig. 3 und Fig. 4: Ansichten des Grundrisses des Gebäudes analog zu Fig. 1, in denen jeweils durchgeführte Messungen entlang eines Wegs des mobilen Objekts und eine darauf basierende Klassifikation der Messungen mit einer Ausführungsform des erfindungsgemäßen Verfahrens verdeutlicht sind.

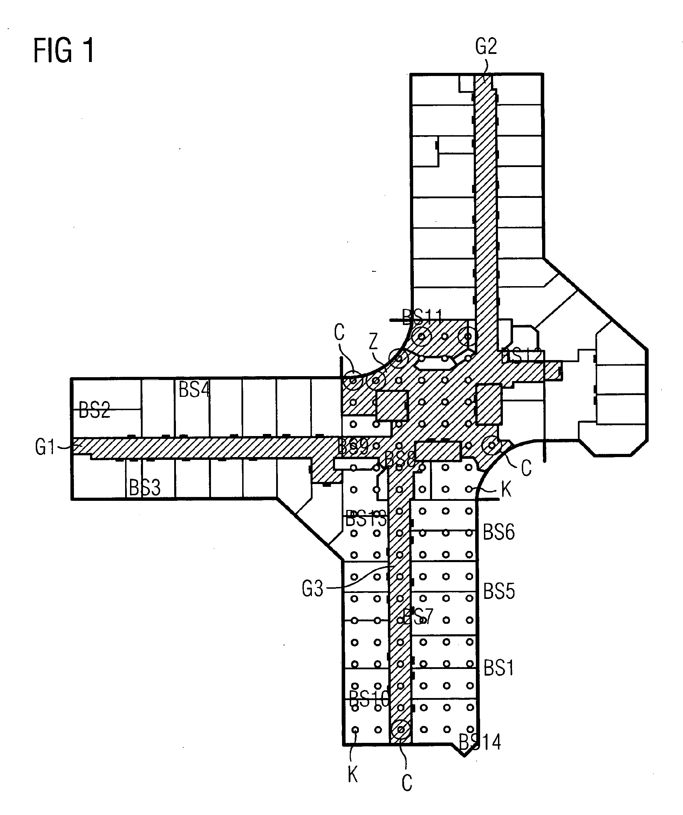

Das erfindungsgemäße Verfahren wird nachfolgend basierend auf einer Ortung eines mobilen Objekts in einem Gebäude beschrieben, wobei der Grundriss des Erdgeschosses dieses Gebäudes in Fig. 1 wiedergegeben ist. Das Gebäude umfasst drei Flügel, entlang denen sich Gänge G1 bis G3 erstrecken, welche in einen zentralen Bereich Z münden. Die Gänge und der zentrale Bereich sind dabei gegenüber dem Rest des Gebäudes graphisch hervorgehoben. Der Rest des Gebäudes wird im Wesentlichen aus einer Vielzahl von Räumen gebildet, wobei die Räume größtenteils rechteckig ausgestaltet sind und über die Gänge zugänglich sind.

Zur Ortung eines mobilen Objekts sind in dem Gebäude eine Vielzahl von WLAN-Basisstationen BS1, BS2, ..., BS14 installiert, wobei sich eine jeweilige Basisstation an derjenigen Position im Gebäude befindet, an der ihre Bezeichnung in Fig. 1 wiedergegeben ist bzw. an welcher eine an der Bezeichnung beginnende Linie endet. In der hier beschriebenen Ausführungsform bewegt sich ein mobiles Objekt durch das Gebäude und gegebenenfalls auch außerhalb des Gebäudes, wobei die Ortung des Objekts über die Feldstärke der einzelnen WLAN-Felder der Basisstationen ermittelt wird. Es wird dabei eine musterbasierte Ortung eingesetzt, für welche basierend auf einer initialen Referenzkarte mit einer Vielzahl von Stützstellen durch entsprechenden Vergleich von an den Stützstellen hinterlegten Feldstärkevektoren mit gemessenen Feldstärkevektoren die Position des Objekts bestimmt wird.

Vorzugsweise wird eine Ortung eingesetzt, wie sie in dem Dokument DE 10 2006 044 293 A1 beschrieben ist. Hierbei erfolgt eine Kalibrierung der Referenzkarte simultan während der Ortung, so dass keine exakte Kalibrierung der Referenzkarte vor der eigentlichen Durchführung der Ortung durchgeführt werden muss. Ebenso kann auch eine probabilistische Ortung basierend auf dem in der deutschen Patentanmeldung mit der Nr. DE 10 2008 038 451.8 beschriebenen Verfahren eingesetzt werden. Auch diese Ortung ermöglicht gleichzeitig die Lokalisation eines Objekts und das Lernen einer Referenzkarte.

In dem Beispiel der Fig. 1 ist die Referenzkarte durch entsprechende Stützstellen in der Form von kleinen Kreisen angedeutet, von denen beispielhaft lediglich einige mit dem Bezugszeichen K bezeichnet sind. Man erkennt, dass die Referenzkarte nur einen Teil des Gebäudes abdeckt, nämlich den Gang G3 und die über diesen Gang zugänglichen Zimmer sowie den zentralen Bereich Z. Bei herkömmlichen Ortungsverfahren ist dabei sicherzustellen, dass sich das mobile Objekt bei der Ortung auch innerhalb des Bereichs der Referenzkarte bewegt, da es ansonsten zu falschen Messungen kommt und die Referenzkarte falsch gelernt wird.

Nachfolgend wird ein Verfahren beschrieben, bei dem bei der Ortung nicht mehr sichergestellt werden muss, dass sich das Objekt auch tatsächlich in dem Bereich der Referenzkarte bewegt. Dies geschieht durch eine Vorverarbeitung der zur Ortung durchgeführten Messungen, mit welcher ermittelt wird, ob es sich bei der jeweiligen Messung um eine Messung innerhalb der Referenzkarte handelt. Nur solche Messungen werden dann zur Ortung und zum Lernen der Referenzkarte berücksichtigt. Sollte das Ziel der Ortung vorrangig das Lernen einer geeigneten Referenzkarte sein, kann beispielsweise eine entsprechende Person mit einem Ortungsgerät zur kontinuierlichen Positionsmessung ausgestattet werden, wobei die Person nicht explizit angewiesen werden muss, dass sie sich nur innerhalb der Referenzkarte bewegt. Vielmehr kann durch das erfindungsgemäße Verfahren selbsttätig festgestellt werden, ob eine entsprechende Messung im Gebiet der Referenzkarte stattgefunden hat.

Zur Durchführung der nachfolgend beschriebenen Ausführungsform des erfindungsgemäßen Verfahrens wird das Gebiet der Referenzkarte, welches dem vorbestimmten Gebiet im Sinne von Anspruch 1 entspricht, durch entsprechende Ausgangsbereiche spezifiziert, über welche ein mobiles Objekt das Gebiet der Referenzkarte betreten bzw. verlassen kann. Die Spezifikation dieser Ausgangsbereiche erfolgt dabei durch eine entsprechende Identifikation von Stützstellen der Referenzkarte, welche an diesen Ausgangsbereichen liegen. In Fig. 1 sind die entsprechend identifizierten Stützstellen in Ausgangsbereichen durch einen dicken Kreis um die jeweilige Stützstelle angedeutet, wobei beispielhaft einige dieser Kreise mit Bezugszeichen C versehen sind. Es wird hierdurch ersichtlich, dass das Gebäude am unteren Ende des Gangs G3 sowie über gegenüberliegende Zugänge im zentralen Bereich Z zugänglich ist. Mit Hilfe der entsprechend markierten Stützstellen C kann bei der Ortung ermittelt werden, ob sich das mobile Objekt in einem Bereich befindet, über den das Gebiet der Referenzkarte betreten bzw. verlassen werden kann.

Wie nachfolgend beschreiben wird, sollen während der Ortung die Messungen an solchen Positionen des Objekts identifiziert werden, welche sich nicht im Gebiet der Referenzkarte befinden. Diese Messungen bzw. Positionen, welche nachfolgend auch als OOA-Messungen bzw. OOA-Punkte bezeichnet werden (OOA = Out of Area), können dabei außerhalb des Gebäudes oder gegebenenfalls auch innerhalb des Gebäudes liegen, beispielsweise in dem Gang G1, in dem keine Referenzkarte hinterlegt ist. Ferner können OOA-Punkte gegebenenfalls auch in anderen Stockwerken des Gebäudes liegen. Zur Detektion der OOA-Punkte wird u.a. ermittelt, ob das mobile Objekt während der Messungen einen Ausgangsbereich passiert. Hierbei ist zu berücksichtigen, dass das Gebiet der Referenzkarte so definiert sein sollte, dass die Anzahl an Ausgangsbereichen möglichst gering ist und so klar wie möglich erkennbar ist. Beispielsweise sollte aus der Referenzkarte nicht ein einzelner Raum des Gebäudes ausgeschlossen werden, insbesondere dann nicht, wenn dieser Raum in der Regel häufig durch das mobile Objekt betreten und verlassen wird.

In der hier beschriebenen Ausführungsform wird eine grobe Lokalisation des mobilen Objekts basierend auf den Stützstellen mit Hilfe einer initialen, noch nicht ausreichend gelernten Referenzkarte durchgeführt, wobei diese Karte beispielsweise auf einem radialen Modell der abfallenden Signalstärken der Basisstationen beruhen kann. Anstatt einer Ortung basierend auf einer Referenzkarte besteht gegebenenfalls auch die Möglichkeit, dass eine grobe Ortung basierend auf Triangulation der Signalfeldstärken der Basisstationen durchgeführt wird. Die grobe Ortung wird benötigt, um zu bestimmen, ob ein mobiles Objekt einen Ausgangsbereich betritt oder verlässt.

Die in Fig. 1 dargestellten Basisstationen BS1 bis BS14 werden in Abhängigkeit von ihren Positionen verschiedenen Typen zugeordnet, welche bei der Durchführung des erfindungsgemäßen Verfahrens berücksichtigt werden.

Es werden dabei vier Typen von Basisstationen definiert:
- Typ 1:: Basisstationen innerhalb des Gebiets der Referenzkarte, deren Signal sehr stark nur an Positionen im Gebiet der Referenzkarte empfangen wird.
- Typ 2:: Basisstationen, welche sich außerhalb des Gebiets der Referenzkarte befinden, so dass deren Signale nur stark in Positionen außerhalb des Gebiets der Referenzkarte empfangen werden.
- Typ 3:: Basisstationen, welche sich bei den Ausgangsbereichen befinden, so dass deren Signal stark in diesen Ausgangsbereichen empfangen werden können.
- Typ 4:: Basisstationen, welche sich an einer Grenze des Gebiets der Referenzkarte befindet, so dass deren Signale sowohl stark innerhalb als auch außerhalb des Gebiets der Referenzkarte empfangen werden können.

Gemäß Fig. 1 sind die Basisstationen BS7 und BS8 Basisstationen vom Typ 1, da sie relativ große Abstände zu Begrenzungen des Gebiets der Referenzkarte aufweisen. Die Basisstationen BS2, BS3 und BS4 sind vom Typ 2, da sie außerhalb des Gebiets der Referenzkarte liegen. Die Basisstationen BS9 und BS11 sind vom Typ 3, da sie sich bei Ausgangsbereichen zum Verlassen bzw. Betreten des Gebiets der Referenzkarte befinden. Alle restlichen Basisstationen sind an der Grenze des Gebiets der Referenzkarte und somit vom Typ 4.

Bei der Identifikation von Messungen an OOA-Punkten ist es wünschenswert, dass Basisstationen in den Ausgangsbereichen vorhanden sind, um hierdurch eindeutig festzustellen, wenn ein mobiles Objekt das Gebiet der Referenzkarte betritt bzw. verlässt. Ferner sind Basisstationen vom Typ 1 hilfreich, welche eindeutig innerhalb des Gebiets der Referenzkarte liegen. Basisstationen vom Typ 2, welche außerhalb des Gebiets der Referenzkarte liegen, können ebenfalls hilfreich sein, da hierdurch eindeutig Positionen außerhalb der Referenzkarte spezifiziert werden können. Es ist dabei jedoch zu berücksichtigen, dass solche Basisstationen nur zum Zwecke der Identifikation von Messungen außerhalb der eigentlichen Referenzkarte verwendet werden. Somit ist die Anbringung solcher Basisstationen oftmals nicht erwünscht. Nichtsdestotrotz kann es in praktischen Anwendungen eine Vielzahl von solchen Basisstationen vom Typ 2 geben, beispielsweise in Gebäuden, bei denen Basisstationen über mehrere Stockwerke verteilt sind, wobei das jeweilige Gebiet einer Referenzkarte jedoch nur für ein Stockwerk definiert ist. Ebenso können Basisstationen vom Typ 2 bei Ortungen in verschiedenen benachbarten Gebäuden auftreten. Basisstationen vom Typ 4 sind im erfindungsgemäßen Verfahren für die Identifikation von Messungen an OOA-Punkten weniger hilfreich.

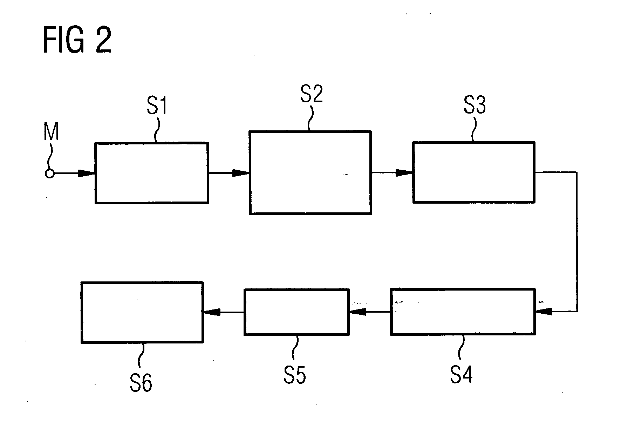

Fig. 2 zeigt ein schematisches Ablaufdiagramm der wesentlichen Verfahrensschritte einer Ausführungsform des erfindungsgemäßen Verfahrens. Dabei werden während der Bewegung eines mobilen Objekts in kurzen zeitlichen Abständen Messungen ermittelt, basierend auf denen das Objekt geortet werden kann bzw. die Referenzkarte gemäß Fig. 1 gelernt werden kann. Die Messungen sind dabei schematisch mit dem Bezugszeichen M angedeutet. Gleichzeitig werden die einzelnen Messungen dahingehend spezifiziert, ob sie innerhalb oder außerhalb des Gebiets der Referenzkarte liegen. Nur Messungen innerhalb des Gebiets der Referenzkarte werden dabei bei der Ortung bzw. beim Lernen der Referenzkarte berücksichtigt. Die einzelnen durchgeführten Messungen spezifizieren die am mobilen Objekt empfangenen Feldstärken der Basisstationen in der Form eines Merkmalsvektors sowie ferner den entsprechenden Messzeitpunkt. Gemäß Schritt S1 fließen die Messungen dabei in einem entsprechenden Puffer, in dem während der Bewegung des Objekts immer eine vorbestimmte Anzahl von Messungen mit deren Messzeitpunkten vorgehalten wird. Die einzelnen Messungen werden dabei mit einer Rate von wenigstens einer Messung innerhalb weniger Sekunden empfangen, so dass durch den Puffer eine nachverfolgbare Spur des mobilen Objekts gebildet wird.

In einem Schritt S2 wird eine Klassifikation der jeweiligen Messung dahingehend durchgeführt, ob die Messung sicher einem Punkt innerhalb des Gebiets der Referenzkarte oder außerhalb des Gebiets der Referenzkarte zugeordnet werden kann. Eine Klassifikation einer Messung dahingehend, dass der Ort der Messung sicher innerhalb des Gebiets der Referenzkarte liegt, erfolgt basierend auf den oben beschriebenen Basisstationen vom Typ 1. Ergibt sich dabei, dass die empfangene Feldstärke zumindest einer Basisstation vom Typ 1 einen vorbestimmten Wert überschreitet, wird die Messung als eine Messung innerhalb des Gebiets der Referenzkarte gewertet. Ebenso werden Messungen, welche sicher außerhalb der Referenzkarte liegen, mit Hilfe von Basisstationen vom Typ 3 spezifiziert, wobei eine Messung einer Position des Objekts außerhalb des Gebiets der Referenzkarte zugeordnet wird, wenn die Feldstärke zumindest einer Basisstation vom Typ 3 einen vorbestimmten Wert überschreitet.

In einer bevorzugten Ausgestaltung wird bei der Ermittlung eines sicher innerhalb des Gebiets der Referenzkarte liegenden Messpunkts auch noch eine Spurverfolgung über eine kurze Distanz (englisch: short distance tracking) durchgeführt. Dabei wird ein Bewegungsmodell des mobilen Objekts berücksichtigt. Das heißt, für das mobile Objekt ist eine vorgegebene Maximalgeschwindigkeit und damit in Abhängigkeit von der Position des Objekts eine maximale Zeitspanne gegeben, die das Objekt benötigt, bis es das Gebiet der Referenzkarte verlässt. Basierend auf dem Modell werden dann alle späteren Messungen dem Bereich innerhalb der Referenzkarte zugeordnet, sofern sie innerhalb der maximalen Zeitspanne gemäß dem Bewegungsmodell liegen. Analog können auch Messungen, welche sich an eine sicher außerhalb des Gebiets der Referenzkarte liegende Messung anschließen, mit dem Bewegungsmodell einer Position außerhalb des Gebiets der Referenzkarte zugeordnet werden, sofern die anschließenden Messpunkte innerhalb eines Zeitintervalls liegen, in dem sich das mobile Objekt mit seiner maximalen Geschwindigkeit nicht in das Gebiet der Referenzkarte hinein bewegen kann.

Nach der Identifikation in Schritt S2 können die übrigen Messungen als unklare Messungen identifiziert werden, von denen nicht sicher ist, ob sich das Objekt bei der Messung innerhalb oder außerhalb des Gebiets der Referenzkarte befindet. Diese unklaren Messungen werden im Folgenden auch als potentielle OOA-Messungen bezeichnet und in Schritt S3 identifiziert. Anstatt der Identifikation der potentiellen OOA-Messungen als solche Punkte, welche im Schritt S2 nicht eindeutig einer Position innerhalb oder außerhalb der Referenzkarte zugeordnet werden können, besteht auch die Möglichkeit, dass für die Identifikation von potentiellen OOA-Messungen separate Kriterien verwendet werden. Sind diese Kriterien nicht erfüllt und ist auch keine Klassifikation als eine sicher innerhalb bzw. außerhalb der Referenzkarte liegende Messung möglich, wird der entsprechende Messpunkt im weiteren Verfahren nicht mehr betrachtet. Eine Messung kann beispielsweise als potentielle OOA-Messung eingestuft werden, wenn eines oder mehrere der folgenden Kriterien erfüllt sind:
- Der Messvektor der empfangene Feldstärken ist für alle bekannten Basisstationen innerhalb des Gebiets der Referenzkarte sehr schwach bzw. gleich Null;
- der Messwertvektor von Basisstationen, welche sich außerhalb des Gebiets der Referenzkarte befinden, wird sehr stark empfangen;
- der Messvektor lässt sich bei der Ortung mittels der Referenzkarte nicht ausreichend in Übereinstimmung mit der Referenzkarte bringen, d.h. die Abweichung des Messvektors von allen Messvektoren der Stützstellen ist sehr groß.

Das zuletzt genannte Kriterium ist insbesondere dann hilfreich, wenn zunächst ein anfängliches Lernen der Referenzkarte durchgeführt wurde, so dass die initiale Referenzkarte schon relativ genau ist.

Nach der Identifikation der potentiellen OOA-Messungen in Schritt S3 erfolgt eine zeitliche Nachverfolgung von zeitlich vorangegangenen und zeitlich zurückliegenden Messpunkten, um die potentiellen OOA-Messungen weiter zu analysieren, um diese Messungen eindeutig einem Bereich innerhalb oder außerhalb des Gebiets der Referenzkarte zuzuordnen. Die Nachverfolgung erfolgt dabei im Schritt S4, in dem ausgehend von einer potentiellen OOA-Messung innerhalb der Menge der gepufferten Messungen eine Anzahl von Messzeitpunkten in die Vergangenheit und eine Anzahl von Messzeitpunkten in die Zukunft gegangen wird, und zwar solange, bis eine Messung gefunden ist, welche eindeutig als eine Messung innerhalb des Gebiets der Referenzkarte bzw. außerhalb des Gebiets der Referenzkarte identifiziert ist.

Ausgehend von dieser Anzahl von Messungen kann dann ermittelt werden, ob das mobile Objekt zwischen der potentiellen OOA-Messung und der Messung innerhalb bzw. außerhalb des Gebiets der Referenzkarte dieses Gebiet betreten bzw. verlassen kann. Dies kann beispielsweise derart erfolgen, dass zunächst basierend auf der initialen Referenzkarte die Position des Objekts bei der aufgefundenen, einer Position innerhalb bzw. außerhalb der Referenzkarte zugeordneten Messung geortet wird und dann basierend auf einem Bewegungsmodell ermittelt wird, ob ein Überschreiten eines Ausgangsbereichs auftreten kann. Das Bewegungsmodell berücksichtigt dabei wiederum die maximale Geschwindigkeit des mobilen Objekts, wobei basierend auf der Differenz der Messzeitpunkte zwischen potentieller OOA-Messung und bekannter Messung sowie in Abhängigkeit von der bekannten Position innerhalb bzw. außerhalb des Gebiets der Referenzkarte ermittelt wird, ob ein Überschreiten eines Ausgangsbereichs überhaupt auftreten kann.

Ist ein solches Überschreiten aufgrund des Bewegungsmodells überhaupt nicht möglich, kann hieraus geschlossen werden, dass ein Überschreiten dieses Bereichs zwischen der betrachteten Messung und der bekannten Messung innerhalb bzw. außerhalb des Gebiets der Referenzkarte nicht aufgetreten ist. Ist aufgrund des Bewegungsmodells ein solches Überschreiten möglich, kann basierend auf einer groben Ortung mit der initialen Referenzkarte ermittelt werden, ob das mobile Objekt sich gemäß den nachverfolgten Messungen im Bereich von Stützstellen an Ausgangsbereichen derart bewegt, dass auf das Überschreiten des Ausgangsbereichs geschlossen werden kann.

Bei der soeben beschriebenen Nachverfolgung der Spur des mobilen Objekts sind solche Spuren zu bevorzugen, welche an einer Messung innerhalb des Gebiets der Referenzkarte enden, da die Genauigkeit der Lokalisation von Messungen außerhalb des Gebiets der Referenzkarte sehr schlecht ist. Insgesamt können folgende Fälle bei der Spurverfolgung unterschieden werden:
- Die Spur endet in einer Messung, welche innerhalb des Gebiets der Referenzkarte liegt. In diesem Fall sind wiederum zwei Unterfälle zu unterscheiden:
   i) Falls die Spur basierend auf der oben beschriebenen Analyse keinen Ausgangsbereich passiert, muss die potentielle OOA-Messung innerhalb des Gebiets der Referenzkarte sein, selbst wenn für die Messung schwache Signalstärken empfangen wurden. Die potentielle OOA-Messung wird dann einer Messung innerhalb der Referenzkarte zugeordnet. Die Signalstärken der Messung können dann beim Lernen der Referenzkarte berücksichtigt werden.
   ii) Falls die Spur einen Ausgangsbereich passiert, liegt die potentielle OOA-Messung außerhalb des Gebiets der Referenzkarte und wird beim weiteren Lernen der Referenzkarte nicht mehr berücksichtigt. Gegebenenfalls können dabei auch noch weitere Messungen entlang der Spur dem Gebiet innerhalb bzw. außerhalb der Referenzkarte zugeordnet werden. Insbesondere können alle Messungen bis zum Verlassen des Ausgangsbereichs dem Gebiet innerhalb der Referenzkarte bzw. alle Messungen bis zum Betreten des Ausgangsbereichs dem Gebiet außerhalb der Referenzkarte zugeordnet werden und die restlichen Messungen dem Gebiet außerhalb bzw. innerhalb der Referenzkarte zugewiesen werden.
- Als zweiter Fall kann eine Spur sowohl in zeitlicher Vorwärtsrichtung als auch in zeitlicher Rückwärtsrichtung an einer OOA-Messung bzw. potentiellen OOA-Messung enden. Die betrachteten Messungen entlang der Spur sind dann wahrscheinlich OOA-Messungen. Nichtsdestotrotz werden diese Messungen nicht derart gewertet, dass sie außerhalb des Gebiets der Referenzkarte liegen. Vielmehr wird mit der Verfolgung der Spuren in dem Verfahren mit weiteren potentiellen OOA-Punkten fortgefahren und gegebenenfalls kann sich aus einer anderen Spurverfolgung mit Sicherheit ergeben, dass eine entsprechende potentielle OOA-Messung innerhalb bzw. außerhalb der Referenzkarte liegt. Sollte am Ende des Verfahrens immer noch nicht mit Sicherheit feststehen, ob ein entsprechender potentieller OOA-Punkt innerhalb bzw. außerhalb der Referenzkarte liegt, wird der Punkt derart eingestuft, dass er außerhalb des Gebiets der Referenzkarte liegt, so dass er beim Lernen der Referenzkarte nicht weiter berücksichtigt wird.

Im Schritt S5 werden dann schließlich alle Messungen, welche als OOA-Messungen klassifiziert wurden, bei der Ortung bzw. dem Lernen der Referenzkarte verworfen. Wie durch Schritt S6 angedeutet ist, können mit dem Verfahren gegebenenfalls auch mehrere Referenzkarten gleichzeitig gelernt werden, welche beispielsweise in unterschiedlichen Stockwerken des Gebäudes liegen. Dabei kann über eine geeignete Spezifizierung von Ausgangsbereichen festgestellt werden, wenn sich ein mobiles Objekt von einem Stockwerk in das nächste bewegt. Das Wechseln des Stockwerks wird dann z.B. durch das Passieren solcher Ausgangsbereiche festgestellt, welche an Positionen von Aufzügen bzw. Treppenhäusern liegen. Somit können mit dem Verfahren gegebenenfalls auch unterschiedliche Stockwerke identifiziert und deren Referenzkarten gelernt werden. Auf diese Weise kann basierend auf einer 2D-Ortung innerhalb eines Stockwerks und der entsprechenden Zuordnung der Messungen zu einem jeweiligen Stockwerk eine quasi 3D-Ortung erreicht werden.

Mit dem soeben beschriebenen Verfahren kann für eine Vielzahl von Messungen entweder bereits während der Durchführung der Messungen bzw. nach Abschluss der Messungen bestimmt werden, welche der Messungen dem Gebiet der Referenzkarte und welche der Messungen nicht dem Gebiet der Referenzkarte zugeordnet werden können. Dies wird bei der Ortung bzw. beim Lernen der Referenzkarte dann derart berücksichtigt, dass für die Positionsbestimmung des mobilen Objekts und die Aktualisierung der Referenzkarte nur solche Messungen verwendet werden, welche innerhalb der Referenzkarte liegen. Das Verfahren kann somit als ein Vorverarbeitungsschritt zum eigentlichen Orten bzw. Lernen der Referenzkarte angesehen werden.

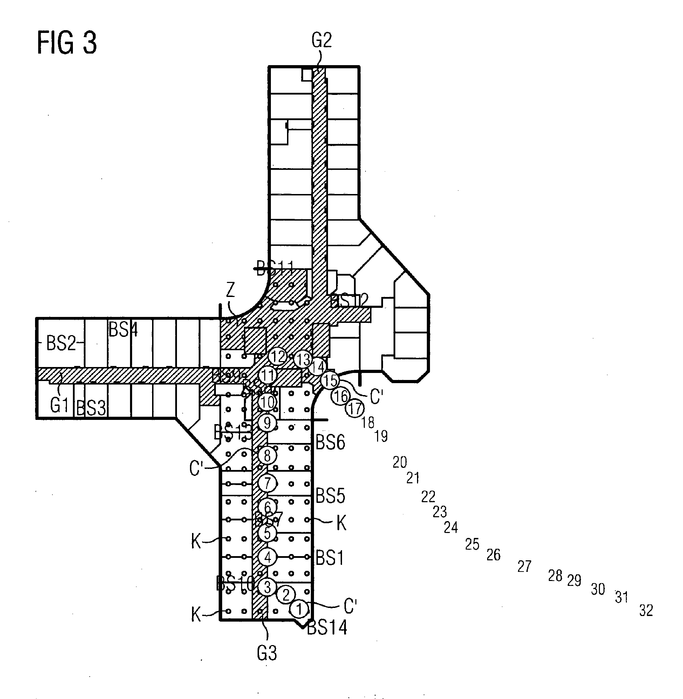

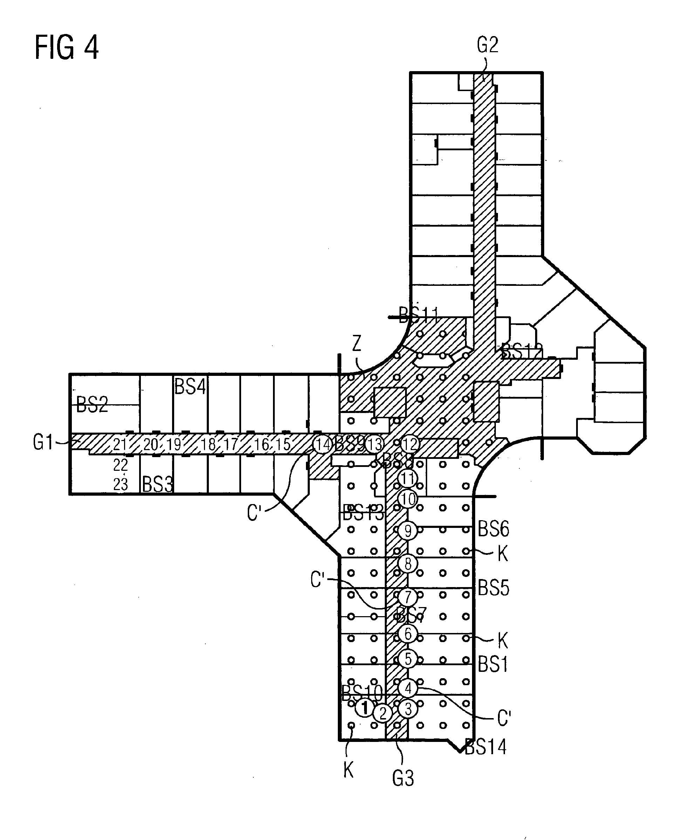

Fig. 3 und Fig. 4 zeigen Szenarien, gemäß denen eine Ausführungsform des erfindungsgemäßen Verfahrens auf verschiedenen Wegen eines mobilen Objekts innerhalb und außerhalb des in Fig. 1 gezeigten Gebäudes getestet wurde. In Fig. 3 und Fig. 4 sind die aufeinander folgenden Messpositionen des mobilen Objekts durch entsprechende Nummerierungen bezeichnet. In Fig. 3 werden dabei Messungen an Positionen 1 bis 32 durchgeführt. Man erkennt, dass sich das mobile Objekt ausgehend von der Position 1 in der Nähe der Basisstation BS14 entlang des Gangs G3 hin zum zentralen Bereich Z bewegt, von dort über einen Ausgangsbereich das Gebäude verlässt und sich immer weiter von dem Gebäude entfernt. Das Verlassen des Gebäudes findet dabei zwischen der Messung 15 und 16 statt. Mit entsprechenden Kreisen um die Nummern der Messungen, welche aus Übersichtlichkeitsgründen nur teilweise mit dem Bezugszeichen C' bezeichnet wird, sind solche Messungen hervorgehoben, welche mit dem oben beschriebenen Verfahren als Messungen innerhalb des Gebiets der Referenzkarte spezifiziert wurden. Entsprechende Messungen ohne Kreise sind demgegenüber Messungen, welche mit dem oben beschriebenen Verfahren als Messungen außerhalb des Gebiets der Referenzkarte identifiziert wurden. Man erkennt aus Fig. 3, dass das Verfahren sehr gute Ergebnisse liefert. Lediglich die Messpunkte 16 und 17, welche außerhalb des Gebiets der Referenzkarte liegen, wurden fälschlicherweise dem Gebiet der Referenzkarte zugeordnet.

Fig. 4 zeigt ein Szenario, bei dem sich das mobile Objekt entlang eines Wegs mit 23 Messpunkten 1 bis 23 von einer Position in der Nähe der Basisstation BS10 über den Gang G3 in den zentralen Bereich Z bewegt und von dort den Gang G1 bis zum Erreichen der Basisstation BS3 abfährt. Dabei liegt das Gebiet entlang des Gangs G1 außerhalb des Gebiets der Referenzkarte. Wiederum sind entsprechende Messungen, welche dem Gebiet der Referenzkarte mit dem oben beschriebenen Verfahren zugeordnet wurden, durch entsprechende Kreise C' angedeutet. Alle anderen Messpunkte wurden dem Gebiet außerhalb der Referenzkarte zugeordnet. Man erkennt, dass das Verfahren wiederum sehr gute Ergebnisse liefert. Es wird lediglich der Messpunkt 14 falsch klassifiziert, der fälschlicherweise dem Gebiet der Referenzkarte zugeordnet wird, obwohl er außerhalb dieses Gebiets liegt.

Das soeben beschriebene erfindungsgemäße Verfahren zur Klassifikation von Messpunkten kann lediglich bei der Initialisierung der Ortung bzw. des entsprechenden Lernverfahrens der Referenzkarte eingesetzt werden. Ebenso kann das Verfahren kontinuierlich beim Lernen der Referenzkarte verwendet werden. Da das getestete Verfahren zumindest einige Punkte falsch klassifiziert, besteht die Gefahr, dass sich dieser Fehler beim wiederholten Lernen der Referenzkarten möglicherweise potenziert und somit zu einer falsch gelernten Referenzkarte und zu einer falschen Ortung führt. Die Erfinder haben anhand von mehreren Tests überprüft, ob der Einsatz des erfindungsgemäßen Verfahrens bei der Initialisierung der Ortung bzw. bei kontinuierlicher Verwendung während des Lernens einer Referenzkarte zu falschen Ergebnissen führt. Es wurde festgestellt, dass das Verfahren trotz einiger falsch klassifizierter Messpunkte dennoch konvergiert und auch mehrmals gelernte Referenzkarten sehr gut mit der tatsächlichen Referenzkarte übereinstimmen, welche durch Kalibrationsmessungen bestimmt wurde.

Die im Vorangegangenen beschriebene Ausführungsform des erfindungsgemäßen Verfahrens weist eine Reihe von Vorteilen auf. Insbesondere kann eine Lokalisation und gegebenenfalls ein unüberwachtes Lernen von Referenzkarten erreicht werden, wobei nicht mehr sichergestellt werden muss, dass das mobile Objekt auch immer in dem definierten Ortungsgebiet liegt. Vielmehr wird durch das Verfahren selbständig ermittelt, ob eine Messung einem Ortungsgebiet bzw. einem Gebiet einer Referenzkarte zugeordnet werden kann. Nur solche Messungen werden dann bei der Ortung bzw. beim Lernen der Referenzkarte berücksichtigt. Das Lernen einer Referenzkarte muss somit nicht mehr durch einen Servicetechniker durchgeführt werden, der die klare Anweisung hat, sich nur innerhalb der Referenzkarte zu bewegen. Vielmehr können auch beliebige Nutzer, welche sich im Bereich des Gebäudes bewegen, mit einem entsprechenden mobilen Objekt ausgestattet werden, wobei die mit diesem mobilen Objekt durchgeführten Messungen nach Filterung bzw. Klassifikation mit dem erfindungsgemäßen Verfahren zum Lernen der Referenzkarte eingesetzt werden können. Darüber hinaus kann das Verfahren auf einfache Weise auch auf drei Dimensionen erweitert werden, indem entsprechende separate Referenzkarten für unterschiedliche Stockwerke festgelegt werden und über eine geeignete Definition von Ausgangsbereichen bestimmt wird, wenn sich das mobile Objekt von einem Stockwerk in das andere bewegt.

## Patentansprüche

1. Verfahren zur rechnergestützten Klassifikation von Messungen (M) zur merkmalsbasierten Ortung eines mobilen Objekts in einem vorbestimmten Gebiet, für das eine oder mehrere Ausgangsbereiche (C) vorgegeben sind, über welche das mobile Objekt das vorbestimmte Gebiet verlassen und betreten kann, wobei jede Messung (M) durch einen Messzeitpunkt und gemessene Merkmale von mehreren Basisstationen (BS1, BS2, ..., BS14) spezifiziert ist, wobei ein Merkmal einer Basisstation (BS1, BS2, ..., BS14) ein von der Basisstation (BS1, BS2, ..., BS14) ausgesendetes Feld am Objekt oder ein vom Objekt ausgesendetes Feld an der Basisstation (BS1, BS2, ..., BS14) charakterisiert, bei dem basierend auf den Positionen der Basisstationen (BS1, BS2, ..., BS14) in Bezug auf das vorbestimmte Gebiet und den bei den jeweiligen Messungen (M) gemessenen Merkmalen der Basisstationen (BS1, BS2, ..., BS14) die Messungen (M) klassifiziert werden, wobei eine jeweilige Messung (M) einer ersten Klasse als eine Messung (M) in einer Position des mobilen Objekts innerhalb des vorbestimmten Gebiets eingestuft wird und eine jeweilige Messung einer zweiten Klasse als eine potentielle Messung (M) in einer Position des mobilen Objekts außerhalb des vorbestimmten Gebiets eingestuft wird;
das Verfahren ist **dadurch gekennzeichnet dass** für eine jeweilige Messung (M) der zweiten Klasse eine Anzahl von aufeinander folgenden Messungen (M) vor und/oder nach dem Messzeitpunkt der jeweiligen Messung (M) bis zum Auftreten einer Messung (M) der ersten Klasse dahingehend analysiert werden, ob das mobile Objekt im Laufe der Anzahl von Messungen das vorbestimmte Gebiet über einen Ausgangsbereich (C) verlassen oder betreten hat, wobei im Falle, dass das mobile Objekt das vorbestimmte Gebiet nicht verlassen oder betreten hat, die jeweilige Messung der ersten Klasse zugeordnet wird.

2. Verfahren nach Anspruch 1, bei dem bei der Klassifikation ferner Messungen (M) einer dritten Klasse berücksichtigt werden, wobei eine Messung (M) der dritten Klasse als eine Messung in einer Position des mobilen Objekts außerhalb des vorbestimmten Gebiets eingestuft wird.

3. Verfahren nach Anspruch 2, bei dem im Falle, dass die Analyse der Anzahl von aufeinander folgenden Messungen (M) vor und/oder nach dem Messzeitpunkt der jeweiligen Messung (M) bis zum Auftreten einer Messung (M) der ersten Klasse ergibt, dass das mobile Objekt das vorbestimmte Gebiet verlassen oder betreten hat, zumindest die jeweilige Messung (M) der dritten Klasse zugeordnet wird, wobei insbesondere alle Messungen der Anzahl von aufeinander folgenden Messungen (M) mit Messzeitpunkten vor Betreten oder nach Verlassen des vorbestimmten Gebiets der dritten Klasse und die restlichen Messungen (M) der Anzahl von aufeinander folgenden Messungen der ersten Klasse zugeordnet werden.

4. Verfahren nach einem der vorhergehenden Ansprüche, bei dem eine jeweilige Messung (M) der ersten Klasse zugeordnet wird, wenn das Merkmal zumindest einer Basisstation (BS1, BS2, ..., BS14) eines ersten Typs ein vorbestimmtes Kriterium erfüllt, wobei Basisstationen des ersten Typs innerhalb des vorbestimmten Gebiets liegen und das vorbestimmte Kriterium derart ausgestaltet ist, dass bei Erfüllung des Kriteriums darauf geschlossen werden kann, dass das mobile Objekt innerhalb des vorbestimmten Gebiets liegt.

5. Verfahren nach einem der vorhergehenden Ansprüche, bei dem eine jeweilige Messung (M) der zweiten Klasse zugeordnet wird, wenn die jeweilige Messung (M) keiner anderen Klasse zugeordnet werden kann und/oder wenn ein oder mehrere vorgegebene Bedingungen erfüllt sind.

6. Verfahren nach einem der vorhergehenden Ansprüche, wenn abhängig von Anspruch 2, bei dem eine jeweilige Messung der dritten Klasse zugeordnet wird, wenn das Merkmal zumindest einer Basisstation (BS1, BS2, ..., BS14) eines zweiten Typs ein vorbestimmtes Kriterium erfüllt, wobei die Basisstationen (BS1, BS2, ..., BS14) des zweiten Typs außerhalb des vorbestimmten Gebiets liegen und das vorbestimmte Kriterium derart ausgestaltet ist, dass bei Erfüllung des Kriteriums darauf geschlossen werden kann, dass das mobile Objekt außerhalb des vorbestimmten Gebiets liegt.

7. Verfahren nach einem der vorhergehenden Ansprüche, bei dem im Falle, dass für die Analyse der Anzahl von aufeinander folgenden Messungen (M) vor und/oder nach dem Messzeitpunkt der jeweiligen Messung (M) keine Messung der ersten Klasse gefunden wird, die jeweilige Messung (M) in der zweiten Klasse bleibt.

8. Verfahren nach einem der vorhergehenden Ansprüche, bei dem für eine jeweilige Messung (M) der ersten Klasse alle Messungen (M) innerhalb einer Zeitspanne vor und/oder nach dem der jeweiligen Messung zugeordneten Messzeitpunkt der ersten Klasse zugeordnet werden, wobei die Zeitspanne durch das Zeitintervall gegeben ist, in dem sich das mobile Objekt ausgehend von seiner Position zum Messzeitpunkt der jeweiligen Messung (M) basierend auf einer vorbestimmten Maximalgeschwindigkeit des mobilen Objekts nicht aus dem vorbestimmten Gebiet heraus bewegen kann.

9. Verfahren nach Anspruch 8, wenn abhängig von Anspruch 4, bei dem für die jeweilige Messung (M) der ersten Klasse die Position des mobilen Objekts zum Messzeitpunkt der jeweiligen Messung als die Position der Basisstation (BS1, BS2, ..., BS14) des ersten Typs abgeschätzt wird, deren Merkmal das vorbestimmte Kriterium erfüllt.

10. Verfahren nach einem der vorhergehenden Ansprüche, wenn abhängig von Anspruch 2, bei dem für eine jeweilige Messung (M) der dritten Klasse alle Messungen (M) innerhalb einer Zeitspanne vor und/oder nach dem der jeweiligen Messung zugeordneten Messzeitpunkt der dritten Klasse zugeordnet werden, wobei die Zeitspanne durch das Zeitintervall gegeben ist, in dem sich das mobile Objekt ausgehend von seiner Position zum Messzeitpunkt der jeweiligen Messung (M) basierend auf einer vorbestimmten Maximalgeschwindigkeit des mobilen Objekts nicht in das vorbestimmte Gebiet hinein bewegen kann.

11. Verfahren nach Anspruch 10, wenn abhängig von Anspruch 6, bei dem für die jeweilige Messung (M) der dritten Klasse die Position des mobilen Objekts zum Messzeitpunkt der jeweiligen Messung (M) als die Position der Basisstation (BS1, BS2, ..., BS14) des zweiten Typs abgeschätzt wird, deren Merkmal das vorbestimmte Kriterium erfüllt.

12. Verfahren nach einem der vorhergehenden Ansprüche, bei dem bei der Analyse der Anzahl von aufeinander folgenden Messungen (M) vor und/oder nach dem Messzeitpunkt der jeweiligen Messung (M) die Positionen des mobilen Objekts basierend auf den gemessenen Merkmalen der Basisstationen (BS1, BS2, ..., BS14) zu den Messzeitpunkten der Anzahl von Messungen (M) mit einem Ortungsverfahren und/oder einem Bewegungsmodell des mobilen Objekts geschätzt werden und hieraus ermittelt wird, ob das mobile Objekt das vorbestimmte Gebiet über einen Ausgangsbereich betreten oder verlassen hat.

13. Verfahren nach Anspruch 12, bei dem das Ortungsverfahren ein musterbasiertes Ortungsverfahren ist, bei dem die Position des mobilen Objekts basierend auf der Übereinstimmung der gemessenen Merkmale der Basisstationen (BS1, BS2, ..., BS14) mit den Merkmalen von Stützstellen (K) in einer Referenzkarte ermittelt wird, wobei vorzugsweise vorbestimmte Stützstellen (K) in der Referenzkarte dem oder den Ausgangsbereichen (C) des vorbestimmten Gebiets zugeordnet sind und mit Hilfe der vorbestimmten Stützstellen (K) bestimmt wird, ob das mobile Objekt das vorbestimmte Gebiet über einen Ausgangsbereich betreten oder verlassen hat.

14. Verfahren nach Anspruch 12 oder 13, bei dem das Ortungsverfahren auf Triangulation der Merkmale der Basisstationen (BS1, BS2, ..., BS14) basiert.

15. Verfahren nach einem der vorhergehenden Ansprüche, bei dem die Merkmale (M) der Basisstationen (BS1, BS2, ..., BS14) die Signalstärken und/oder die Laufzeiten und/oder die Winkelverteilungen des von den Basisstationen (BS1, BS2, ..., BS14) ausgesendeten Felds am Objekt oder des vom Objekt ausgesendetes Felds an den Basisstationen (BS1, BS2, ..., BS14) sind.

16. Verfahren nach Anspruch 15, wenn abhängig von Anspruch 4, bei dem eine jeweilige Messung (M) der ersten Klasse zugeordnet wird, wenn die Signalstärke zumindest einer Basisstation (BS1, BS2, ..., BS14) eines ersten Typs einen vorbestimmten Wert überschreitet.

17. Verfahren nach Anspruch 15 oder 16, wenn abhängig von Anspruch 6, bei dem eine jeweilige Messung (M) der dritten Klasse zugeordnet wird, wenn die Signalstärke zumindest einer Basisstation (BS1, BS2, ..., BS14) des zweiten Typs einen vorbestimmten Wert überschreitet.

18. Verfahren nach einem der Ansprüche 15 bis 17, wenn abhängig von Anspruch 5, bei dem eine jeweilige Messung (M) der zweiten Klasse zugeordnet wird, wenn zumindest eine der folgenden Bedingungen erfüllt ist:
- die Signalstärken aller Basisstationen (M) innerhalb des vorbestimmten Gebiets liegen unterhalb eines vorbestimmten Werts;
- die Signalstärken vorbestimmter Basisstationen außerhalb des vorbestimmten Gebiets liegen oberhalb eines vorbestimmten Werts.

19. Verfahren nach einem der Ansprüche 15 bis 18, wenn abhängig von Anspruch 5 und 13, bei dem eine jeweilige Messung (M) der zweiten Klasse zugeordnet wird, wenn zumindest die Bedingung erfüllt ist, dass keine ausreichende Übereinstimmung der Merkmale der Basisstationen (BS1, BS2, ..., BS14) der jeweiligen Messung (M) mit den Merkmalen zumindest einer Stützstellen (K) in der Referenzkarte vorliegt.

20. Verfahren nach einem der vorhergehenden Ansprüche, bei dem mit dem Verfahren Messungen (M) von mehreren vorbestimmten Gebieten klassifiziert werden, wobei die vorbestimmten Gebiete vorzugsweise in unterschiedlichen Stockwerken eines Gebäudes liegen und Ausgangsbereiche (C) der vorbestimmten Gebiete spezifiziert sind, über welche ein mobiles Objekt die Stockwerke wechseln kann.

21. Verfahren nach einem der vorhergehenden Ansprüche, bei dem das Verfahren nach der Durchführung der Messungen (M) ausgeführt wird.

22. Verfahren nach einem der vorhergehenden Ansprüche, bei dem das Verfahren während der Durchführung der Messungen (M) ausgeführt wird, wobei die Messungen (M) in einem vorbestimmten Zeitintervall gepuffert werden.

23. Verfahren zur merkmalsbasierten Ortung eines mobilen Objekts in einem vorbestimmten Gebiet, für das eine oder mehrere Ausgangsbereiche (C) vorgegeben sind, über welche das mobile Objekt das vorbestimmte Gebiet verlassen und betreten kann, wobei jede Messung (M) durch einen Messzeitpunkt und gemessene Merkmale von mehreren Basisstationen (BS1, BS2, ..., BS14) spezifiziert ist, wobei ein Merkmal einer Basisstation ein von der Basisstation ausgesendetes Feld am Objekt oder ein vom Objekt ausgesendetes Feld an der Basisstation charakterisiert, wobei die Messungen (M) basierend auf das Verfahren nach einem der Ansprüche 1-22 klassifiziert werden und bei der Ortung ausschließlich Messungen (M) der ersten Klasse berücksichtigt werden.

24. Vorrichtung zur rechnergestützten Klassifikation von Messungen zur merkmalsbasierten Ortung eines mobilen Objekts in einem vorbestimmten Gebiet, wobei die Vorrichtung derart ausgestaltet ist, dass das Verfahren nach einem der Ansprüche 1 bis 22 mit der Vorrichtung durchführbar ist.

25. Vorrichtung zur merkmalsbasierten Ortung eines mobilen Objekts in einem vorbestimmten Gebiet, wobei die Vorrichtung derart ausgestaltet ist, dass mit der Vorrichtung das Verfahren nach Anspruch 23 durchführbar ist.

26. Computerprogrammprodukt mit einem auf einem maschinenlesbaren Träger gespeicherten Programmcode zur Durchführung des Verfahrens nach einem der Ansprüche 1 bis 23, wenn das Programm auf einem Rechner abläuft.

## Claims

1. Method for the computer-aided classification of measurements (M) for the feature-based positioning of a mobile object in a predetermined region, for which one or more exit areas (C) are defined, by means of which the mobile object can leave and enter the predetermined region, wherein each measurement (M) is specified by a measuring time and measured features of a plurality of base stations (BS1, BS2, ..., BS14), wherein one feature of a base station (BS1, BS2, ..., BS14) characterises a field emitted by the base station (BS1, BS2, ..., BS14) at the object or a field emitted by the object at the base station (BS1, BS2, ..., BS14), in which the measurements (M) are classified on the basis of the positions of the base stations (BS1, BS2, ..., BS14) with respect to the predetermined region and the features of the base stations (BS1, BS2, ..., BS14) measured during the respective measurements (M), wherein a respective measurement (M) of a first class is categorised as a measurement (M) in a position of the mobile object inside the predetermined region and a respective measurement of a second class is categorised as a potential measurement (M) in a position of the mobile object outside the predetermined region;
the method is **characterised in that**, for a respective measurement (M) of the second class, a number of successive measurements (M) before and/or after the measuring time of the respective measurement (M) up until the occurrence of a measurement (M) of the first class is analysed as to whether the mobile object has left or entered the predetermined region by way of an exit area (C) during the course of the number of measurements, wherein in the event that the mobile object has not left or entered the predetermined region the respective measurement is assigned to the first class.

2. Method according to claim 1, wherein measurements (M) of a third class are additionally taken into consideration with regard to classification, wherein a measurement (M) of the third class is categorised as a measurement in a position of the mobile object outside the predetermined region.

3. Method according to claim 2, wherein in the event that the analysis of the number of successive measurements (M) before and/or after the measuring time of the respective measurement (M) up until the occurrence of a measurement (M) of the first class shows that the mobile object has left or entered the predetermined region, at least the respective measurement (M) is assigned to the third class, wherein in particular all the measurements of the number of successive measurements (M) having measuring times prior to entry to or after exit from the predetermined region are assigned to the third class and the remaining measurements (M) of the number of successive measurements are assigned to the first class.

4. Method according to one of the preceding claims, wherein a respective measurement (M) is assigned to the first class when the feature of at least one base station (BS1, BS2, ..., BS14) of a first type satisfies a predetermined criterion, wherein base stations of the first type are located inside the predetermined region and the predetermined criterion is designed in such a manner that when the criterion is satisfied it is possible to conclude that the mobile object is located inside the predetermined region.

5. Method according to one of the preceding claims, wherein a respective measurement (M) is assigned to the second class in the situation when the respective measurement (M) cannot be assigned to any other class and/or when one or more predetermined conditions are satisfied.

6. Method according to one of the preceding claims, if dependent on claim 2, wherein a respective measurement is assigned to the third class in the situation when the feature of at least one base station (BS1, BS2, ..., BS14) of a second type satisfies a predetermined criterion, wherein the base stations (BS1, BS2, ..., BS14) of the second type are located outside the predetermined region and the predetermined criterion is designed in such a manner that when the criterion is satisfied it is possible to conclude that the mobile object is located outside the predetermined region.

7. Method according to one of the preceding claims, wherein in the case that no measurement of the first class is found for the analysis of the number of successive measurements (M) before and/or after the measuring time of the respective measurement (M), the respective measurement (M) remains in the second class.

8. Method according to one of the preceding claims, wherein for a respective measurement (M) of the first class all the measurements (M) within a period of time before and/or after the measuring time assigned to the respective measurement are assigned to the first class, wherein the period of time is given by the time interval during which the mobile object, on the basis of its position at the measuring time of the respective measurement (M) and based on a predetermined maximum speed of the mobile object, is unable to move out of the predetermined region.

9. Method according to claim 8, if dependent on claim 4, wherein for the respective measurement (M) of the first class the position of the mobile object at the measuring time of the respective measurement is estimated as the position of the base station (BS1, BS2, ..., BS14) of the first type, the feature of which satisfies the predetermined criterion.

10. Method according to one of the preceding claims, if dependent on claim 2, wherein for a respective measurement (M) of the third class all the measurements (M) within a period of time before and/or after the measuring time assigned to the respective measurement are assigned to the third class, wherein the period of time is given by the time interval during which the mobile object, on the basis of its position at the measuring time of the respective measurement (M) and based on a predetermined maximum speed of the mobile object, is unable to move into the predetermined region.

11. Method according to claim 10, if dependent on claim 6, wherein for the respective measurement (M) of the third class the position of the mobile object at the measuring time of the respective measurement (M) is estimated as the position of the base station (BS1, BS2, ..., BS14) of the second type, the feature of which satisfies the predetermined criterion.

12. Method according to one of the preceding claims, wherein with regard to the analysis of the number of successive measurements (M) before and/or after the measuring time of the respective measurement (M) the positions of the mobile object are estimated on the basis of the measured features of the base stations (BS1, BS2, ..., BS14) at the measuring times of the number of measurements (M) using a positioning method and/or a movement model of the mobile object and from this is ascertained whether the mobile object has entered or left the predetermined region by way of an exit area.

13. Method according to claim 12, wherein the positioning method is a pattern-based positioning method, wherein the position of the mobile object is ascertained on the basis of the correspondence of the measured features of the base stations (BS1, BS2, ..., BS14) with the features of nodes (K) in a reference map, wherein predetermined nodes (K) in the reference map are preferably assigned to the exit area or exit areas (C) of the predetermined region and the predetermined nodes (K) are used to determine whether the mobile object has entered or left the predetermined region by way of an exit area.

14. Method according to claim 12 or 13, wherein the positioning method is based on triangulation of the features of the base stations (BS1, BS2, ..., BS14).

15. Method according to one of the preceding claims, wherein the features (M) of the base stations (BS1, BS2, ..., BS14) are the signal strengths and/or the propagation delays and/or the angular distributions at the object of the field emitted by the base stations (BS1, BS2, ..., BS14) or at the base stations (BS1, BS2, ..., BS14) of the field emitted by the object.

16. Method according to claim 15, if dependent on claim 4, wherein a respective measurement (M) is assigned to the first class if the signal strength of at least one base station (BS1, BS2, ..., BS14) of a first type exceeds a predetermined value.

17. Method according to 15 or 16, if dependent on claim 6, wherein a respective measurement (M) is assigned to the third class if the signal strength of at least one base station (BS1, BS2, ..., BS14) of the second type exceeds a predetermined value.

18. Method according to one of claims 15 to 17, if dependent on claim 5, wherein a respective measurement (M) is assigned to the second class when at least one of the following conditions is satisfied:
- the signal strengths of all the base stations (M) inside the predetermined region lie below a predetermined value;
- the signal strengths of predetermined base stations outside the predetermined region lie above a predetermined value.

19. Method according to one of claims 15 to 18, if dependent on claims 5 and 13, wherein a respective measurement (M) is assigned to the second class when at least the condition is satisfied that there is no adequate correspondence between the features of the base stations (BS1, BS2, ..., BS14) of the respective measurement (M) and the features of at least one node (K) in the reference map.

20. Method according to one of the preceding claims, wherein measurements (M) from a plurality of predetermined regions can be classified using the method, wherein the predetermined regions are preferably located in different floors of a building and exit areas (C) of the predetermined regions are specified, by way of which a mobile object is able to change floors.

21. Method according to one of the preceding claims, wherein the method is carried out after the measurements (M) have been performed.

22. Method according to one of the preceding claims, wherein the method is carried out while the measurements (M) are being performed, wherein the measurements (M) are buffered at a predetermined time interval.

23. Method for the feature-based positioning of a mobile object in a predetermined region, for which one or more exit areas (C) are defined, by means of which the mobile object can leave and enter the predetermined region, wherein each measurement (M) is specified by a measuring time and measured features of a plurality of base stations (BS1, BS2, ..., BS14), wherein one feature of a base station characterises a field emitted by the base station at the object or a field emitted by the object at the base station, wherein the measurements (M) are classified on the basis of the method according to one of claims 1 to 22 and exclusively measurements (M) of the first class are taken into consideration with regard to the positioning.

24. Apparatus for the computer-aided classification of measurements for the feature-based positioning of a mobile object in a predetermined region, wherein the apparatus is designed in such a manner that the method as claimed in one of claims 1 to 22 can be carried out using the apparatus.

25. Apparatus for the feature-based positioning of a mobile object in a predetermined region, wherein the apparatus is designed in such a manner that the method as claimed in claim 23 can be carried out using the apparatus.

26. Computer program product having program code stored on a machine-readable medium for carrying out the method as claimed in one of claims 1 to 23 when the program runs on a computer.

## Revendications

1. Procédé de classification assistée par ordinateur de mesures (M) pour la localisation basée sur des caractéristiques d'un objet mobile dans une zone prédéterminée, pour laquelle une ou plusieurs zones de départ (C) sont prédéfinies, via lesquelles l'objet mobile peut quitter ou entrer dans la zone prédéterminée, dans lequel chaque mesure (M) est spécifiée par un moment de mesure et des caractéristiques mesurées de plusieurs stations de base (BS1, BS2, ..., BS14), dans lequel une caractéristique d'une station de base (BS1, BS2, ..., BS14) caractérise un champ émis par la station de base (BS1, BS2, ..., BS14) au niveau de l'objet ou un champ émis par l'objet au niveau de la station de base (BS1, BS2, ..., BS14), les mesures (M) étant classifiées en se basant sur les positions des stations de base (BS1, BS2, ..., BS14) par rapport à la zone prédéterminée et sur les caractéristiques des stations de base (BS1, BS2, ..., BS14) mesurées pour les mesures (M) respectives, dans lequel une mesure (M) respective d'une première catégorie est hiérarchisée en tant que mesure (M) dans une position de l'objet mobile à l'intérieur d'une zone prédéterminée et une mesure respective d'une deuxième catégorie est hiérarchisée en tant que mesure (M) potentielle dans une position de l'objet mobile à l'extérieur de la zone prédéterminée ;
le procédé est **caractérisé en ce que** pour une mesure (M) respective de la deuxième catégorie une pluralité de mesures (M) successives avant et/ou après le moment de mesure de la mesure (M) respective jusqu'à l'apparition d'une mesure (M) de la première catégorie sont analysées de manière à déterminer si l'objet mobile tout au long de la pluralité de mesures a quitté ou est entré dans la zone prédéterminée via une zone de départ (C), dans lequel dans le cas où l'objet mobile n'a pas quitté ou n'est pas entré dans la zone prédéterminée, la mesure respective est associée à la première catégorie.

2. Procédé selon la revendication 1, dans lequel lors de la classification des mesures (M) d'une troisième catégorie sont en outre prises en compte, dans lequel une mesure (M) de la troisième catégorie est hiérarchisée en tant que mesure dans une position de l'objet mobile à l'extérieur de la zone prédéterminée.

3. Procédé selon la revendication 2, dans lequel dans le cas où il ressort de l'analyse de la pluralité de mesures (M) successives avant et/ou après le moment de mesure de la mesure (M) respective jusqu'à l'apparition d'une mesure (M) de la première catégorie que l'objet mobile a quitté ou est entré dans la zone prédéterminée, au moins la mesure (M) respective est associée à la troisième catégorie, dans lequel en particulier toutes les mesures de la pluralité de mesures (M) successives avec des moments de mesure avant d'entrer dans ou après avoir quitté la zone prédéterminée de la troisième catégorie et les mesures (M) restantes de la pluralité de mesures successives sont associées à la première catégorie.

4. Procédé selon l'une des revendications précédentes, dans lequel une mesure (M) respective est associée à la première catégorie, lorsque la caractéristique d'au moins une station de base (BS1, BS2, ..., BS14) d'un premier type remplit un critère prédéterminé, dans lequel les stations de base du premier type se trouvent à l'intérieur de la zone prédéterminée et le critère prédéterminé est prévu de telle sorte que lorsque le critère est rempli on peut en conclure que l'objet mobile se trouve à l'intérieur de la zone prédéterminée.

5. Procédé selon l'une des revendications précédentes, dans lequel une mesure (M) respective est associée à la deuxième catégorie, lorsque la mesure (M) respective ne peut être associée à aucune autre catégorie et/ou lorsqu'une ou plusieurs conditions prédéfinies sont remplies.

6. Procédé selon l'une des revendications précédentes, dans une relation de dépendance vis-à-vis de la revendication 2, dans lequel une mesure respective est associée à la troisième catégorie, lorsque la caractéristique d'au moins une station de base (BS1, BS2, ..., BS14) d'un deuxième type remplit un critère prédéterminé, dans lequel les stations de base (BS1, BS2, ..., BS14) du deuxième type se trouvent à l'extérieur de la zone prédéterminée et le critère prédéterminé est prévu de telle sorte que lorsque le critère est rempli on peut en conclure que l'objet mobile se trouve à l'extérieur de la zone prédéterminée.

7. Procédé selon l'une des revendications précédentes, dans lequel dans le cas où pour l'analyse de la pluralité de mesures (M) successives avant et/ou après le moment de mesure de la mesure (M) respective aucune mesure de la première catégorie n'est trouvée, la mesure (M) respective reste dans la deuxième catégorie.

8. Procédé selon l'une des revendications précédentes, dans lequel pour une mesure (M) respective de la première catégorie toutes les mesures (M) à l'intérieur d'une période avant et/ou après le moment de mesure associé à la mesure respective sont associées à la première catégorie, dans lequel la période est indiquée par l'intervalle de temps dans lequel l'objet mobile en partant de sa position par rapport au moment de mesure de la mesure (M) respective en se basant sur une vitesse maximale prédéterminée de l'objet mobile ne peut pas quitter la zone prédéterminée.

9. Procédé selon la revendication 8, dans une relation de dépendance vis-à-vis de la revendication 4, dans lequel pour la mesure (M) respective de la première catégorie la position de l'objet mobile par rapport au moment de mesure de la mesure respective est évaluée comme étant la position de la station de base (BS1, BS2, ..., BS14) du premier type, dont la caractéristique remplit le critère prédéterminé.

10. Procédé selon l'une des revendications précédentes, dans une relation de dépendance vis-à-vis de la revendication 2, dans lequel pour une mesure (M) respective de la troisième catégorie toutes les mesures (M) à l'intérieur d'une période avant et/ou après le moment de mesure associé à la mesure respective sont associées à la troisième catégorie, dans lequel la période est indiquée par l'intervalle de temps, dans lequel l'objet mobile en partant de sa position par rapport au moment de mesure de la mesure (M) respective en se basant sur une vitesse maximale prédéterminée de l'objet mobile ne peut pas entrer dans la zone prédéterminée.

11. Procédé selon la revendication 10, dans une relation de dépendance vis-à-vis de la revendication 6, dans lequel pour la mesure (M) respective de la troisième catégorie la position de l'objet mobile par rapport au moment de mesure de la mesure (M) respective est évaluée comme étant la position de la station de base (BS1, BS2, ..., BS14) du deuxième type, dont la caractéristique remplit le critère prédéterminé.

12. Procédé selon l'une des revendications précédentes, dans lequel lors de l'analyse de la pluralité de mesures (M) successives avant et/ou après le moment de mesure de la mesure (M) respective les positions de l'objet mobile en se basant sur les caractéristiques mesurées des stations de base (BS1, BS2, ..., BS14) par rapport aux moments de mesure de la pluralité de mesures (M) sont évaluées avec un procédé de localisation et/ou un modèle de déplacement de l'objet mobile et on détermine à partir de là si l'objet mobile est entré dans ou a quitté la zone prédéterminée via une zone de départ.

13. Procédé selon la revendication 12, dans lequel le procédé de localisation est un procédé de localisation basé sur un modèle, dans lequel la position de l'objet mobile en se basant sur la concordance des caractéristiques mesurées des stations de base (BS1, BS2, ..., BS14) avec les caractéristiques de points d'appui (K) dans une carte de référence est déterminée, dans lequel de préférence des points d'appui (K) prédéterminés dans la carte de référence sont associés à la ou aux zones de départ (C) de la zone prédéterminée et à l'aide des points d'appui (K) prédéterminés on détermine si l'objet mobile est entré dans ou a quitté la zone prédéterminée via une zone de départ.

14. Procédé selon la revendication 12 ou 13, dans lequel le procédé de localisation se base sur la triangulation des caractéristiques des stations de base (BS1, BS2, ..., BS14).

15. Procédé selon l'une des revendications précédentes, dans lequel les caractéristiques (M) des stations de base (BS1, BS2, ..., BS14) sont les intensités des signaux et/ou les durées de marche et/ou les distributions angulaires du champ émis par les stations de base (BS1, BS2, ..., BS14) au niveau de l'objet ou du champ émis par l'objet au niveau des stations de base (BS1, BS2, ..., BS14).

16. Procédé selon la revendication 15, dans une relation de dépendance vis-à-vis de la revendication 4, dans lequel une mesure (M) respective est associée à la première catégorie, lorsque l'intensité du signal d'au moins une station de base (BS1, BS2, ..., BS14) d'un premier type dépasse une valeur prédéterminée.

17. Procédé selon la revendication 15 ou 16, dans une relation de dépendance vis-à-vis de la revendication 6, dans lequel une mesure (M) respective est associée à la troisième catégorie, lorsque l'intensité du signal d'au moins une station de base (BS1, BS2, ..., BS14) du deuxième type dépasse une valeur prédéterminée.

18. Procédé selon l'une des revendications 15 à 17, dans une relation de dépendance vis-à-vis de la revendication 5, dans lequel une mesure (M) respective est associée à la deuxième catégorie, lorsqu'au moins une des conditions suivantes est remplie :
- les intensités des signaux de toutes les stations de base (M) à l'intérieur de la zone prédéterminée se situent en dessous d'une valeur prédéterminée ;
- les intensités des signaux de stations de base prédéterminées à l'extérieur de la zone prédéterminée se situent au-dessus d'une valeur prédéterminée.

19. Procédé selon l'une des revendications 15 à 18, dans une relation de dépendance vis-à-vis de la revendication 5 et 13, dans lequel une mesure (M) respective est associée à la deuxième catégorie, lorsqu'au moins la condition selon laquelle il n'y a aucune concordance suffisante des caractéristiques des stations de base (BS1, BS2, ..., BS14) de la mesure (M) respective est remplie avec les caractéristiques d'au moins un point d'appui (K) dans la carte de référence.

20. Procédé selon l'une des revendications précédentes, dans lequel avec le procédé des mesures (M) de plusieurs zones prédéterminées sont classifiées, dans lequel les zones prédéterminées se trouvent de préférence dans différents étages d'un bâtiment et des zones de départ (C) des zones prédéterminées sont spécifiées, via lesquelles un objet mobile peut alterner les étages.

21. Procédé selon l'une des revendications précédentes, dans lequel le procédé est réalisé après l'exécution des mesures (M).

22. Procédé selon l'une des revendications précédentes, dans lequel le procédé est réalisé pendant l'exécution des mesures (M), dans lequel les mesures (M) sont mises en tampon dans un intervalle de temps prédéterminé.

23. Procédé de localisation basée sur des caractéristiques d'un objet mobile dans une zone prédéterminée, pour laquelle une ou plusieurs zones de départ (C) sont prédéfinies, via lesquelles l'objet mobile peut quitter ou entrer dans la zone prédéterminée, dans lequel chaque mesure (M) est spécifiée par un moment de mesure et des caractéristiques mesurées de plusieurs stations de base (BS1, BS2, ..., BS14), dans lequel une caractéristique d'une station de base caractérise un champ émis par la station de base au niveau de l'objet ou un champ émis par l'objet au niveau de la station de base, dans lequel les mesures (M) sont classifiées en se basant sur le procédé selon l'une des revendications 1-22 et lors de la localisation seules les mesures (M) de la première catégorie sont prises en compte.

24. Dispositif de classification assistée par ordinateur de mesures pour la localisation basée sur des caractéristiques d'un objet mobile dans une zone prédéterminée, dans lequel le dispositif est prévu de telle sorte que le procédé peut être exécuté selon l'une des revendications 1 à 22 avec le dispositif.

25. Procédé de localisation basée sur des caractéristiques d'un objet mobile dans une zone prédéterminée, dans lequel le dispositif est prévu de telle sorte que le procédé selon la revendication 23 peut être exécuté avec le dispositif.

26. Produit de programme informatique avec un code de programme stocké sur un support lisible en machine pour l'exécution du procédé selon l'une des revendications 1 à 23, lorsque le programme est exécuté sur un ordinateur.
